# EUROPEAN PATENT SPECIFICATION

(11) **EP 3 893 251 B1**
(45) Date of publication and mention of the grant of the patent: **04.02.2026**
(21) Application number: 18942559.8
(22) Date of filing: 05.12.2018
(51) Int. Cl.: G21C 1/09, G21C 13/036

(54) **NUCLEAR POWER STATION PRESSURIZER AND WATER SEALING DEVICE THEREOF**
DRUCKHALTER FÜR KERNKRAFTWERK UND WASSERABDICHTUNGSVORRICHTUNG DAFÜR
PRESSURISEUR DE CENTRALE NUCLÉAIRE ET SON DISPOSITIF D'ÉTANCHÉITÉ À L'EAU

(43) Date of publication of application: 13.10.2021
(73) Proprietor: China Nuclear Power Engineering Co., Ltd., Shenzhen, Guangdong 518124 (CN); China General Nuclear Power Group, Shenzhen, Guangdong 518031 (CN); CGN Power Co., Ltd., Shenzhen, Guangdong 518031 (CN)
(72) Inventor: LI, Quanbing, Shenzhen, Guangdong 518124 (CN); RAN, Xiaobing, Shenzhen, Guangdong 518124 (CN); ZHOU, Peng, Shenzhen, Guangdong 518124 (CN); REN, Hongbing, Shenzhen, Guangdong 518124 (CN); FU, Guanhua, Shenzhen, Guangdong 518124 (CN); LIANG, Guozhen, Shenzhen, Guangdong 518124 (CN); HUANG, Xiaojie, Shenzhen, Guangdong 518124 (CN); ZHOU, Zile, Shenzhen, Guangdong 518124 (CN)
(74) Representative: Greaves Brewster LLP
(86) International application number: PCT/CN2018/119429
(87) International publication number: WO 2020/113483

(56) References cited:
- CN-A- 105 654 994
- CN-A- 105 679 381
- CN-A- 106 328 216
- CN-A- 106 328 216
- CN-U- 205 104 238
- CN-U- 205 177 413
- US-A- 4 673 546
- US-A- 5 398 719
- US-A1- 2009 141 850

## Description

### FIELD OF THE INVENTION

The present invention generally relates to nuclear power plants and, more particularly, relates to a nuclear power plant pressurizer and a water sealing device thereof.

### BACKGROUND OF THE INVENTION

The pressurizer is important pressure safety equipment in nuclear power plants which is mainly used to adjust and control the pressure and volume of the primary circuit main system, so as to ensure the integrity of the pressure boundary of the primary circuit main system.

The increase of oxygen content will accelerate the chemical reaction rate of metal. In order to slow down the chemical reaction between the water/impurities in the water of the primary circuit and the metal, it is necessary to control the oxygen content in the primary circuit. In the normal operation of nuclear power plants, hydrogen is generally filled into the capacity control box, so that the hydrogen in the water in the primary circuit reach a certain concentration, to inhibit the genration of oxygen via irradiating the water, thereby slowing down the chemical reaction rate of the water/impurities in the primary circuit and the metal. In order to prevent the hydrogen in the primary circuit from leaking through the pressurizer safety valve, a water sealing device must be installed in the pressurizer safety valve to avoid hydrogen leakage.

A conventional water sealing device adopts an U-shaped tube cold water sealing structure, and the U-shaped tube cold water sealing structure is located on the process pipe connecting the upper head of the pressurizer and the safety valve. During the startup and operation of the pressurizer, the saturated water vapor in the pressurizer condenses in the cold water sealing structure of the U-shaped tube. When the condensed water level is higher than the lowest point on the upper s inner wall of the U-shaped tube, the water seal is established. The pressurizer water sealing device can effectively reduce the leakage of hydrogen in the vapor phase space in the pressurizer. However, the U-shaped tube cold water sealing structure is located outside the upper head of the pressurizer, and the temperature of internal condensate water is low. When the safety valve of the pressurizer is opened, the discharge pipe downstream of the safety valve will bear a higher hydraulic load. At the same time, the U-shaped tube cold water sealing structure occupies more layout space.

In view of the foregoing, what is needed, therefore, is to provide a new type of nuclear power plant pressurizer and a water sealing device thereof to overcome the above disadvantages.

CN 106 328 216 A discloses a nuclear power plant voltage stabilizer water seal arrangement and nuclear power plant voltage stabilizer. US5,398,719 discloses a combination pressure vessel and pressure protection installation for the pressure vessel that includes a connector pipe connected to the pressure vessel. US4,672,546 discloses a reflective type insulation utilized to elevate the temperature in the loop seal of a pressurizer.

### SUMMARY OF THE INVENTION

One object of the present invention is to provide a nuclear power plant pressurizer and a water sealing device thereof, to overcome the disadvantages of the prior art.

According to one embodiment of the present invention, a nuclear power plant pressurizer comprising a water sealing device includes:
an upper head body having an inner surface surfacing layer at an inner side of the pressurizer and a heat insulation layer at an outer side of the pressurizer; and
a pressurizer safety valve connecting pipe extending upwardly and obliquely through the upper head body, the pressurizer safety valve connecting pipe being provided with a safety end, one end of the safety end being provided with a heat sleeve in the pressurizer safety valve connecting pipe, and the other end of the safety end extending out of the heat insulation layer (102);
wherein the safety end is provided with an elbow extending downwardly and obliquely into the pressurizer, and a distal end of the elbow is vertically located above the lowest point of the upper inner sidewall of the elbow.

According to one aspect of the present invention, the heat insulation layer has a thickness of 280mm-300mm.

According to one aspect of the present invention, the process pipe of the pressurizer safety valve is connected to the safety end of the pressurizer safety valve connecting pipe via welding.

According to one aspect of the present invention, the pressurizer safety valve connecting pipe and the safety end at least partially extend out of the heat insulation layer.

According to one aspect of the present invention, the process pipe of the pressurizer safety valve, the pressurizer safety valve connecting pipe and the safety end extend out of the heat insulation layer for at least 480mm totally.

According to one aspect of the present invention, the pressurizer safety valve connecting pipe is connected to the safety end via welding, and the pressurizer safety valve connecting pipe is connected to the upper head body via welding.

According to one aspect of the present invention, a number of protrusions are provided between the pressurizer safety valve connecting pipe and the heat sleeve.

According to one aspect of the present invention, the protrusions are integrally formed with the heat sleeve via machining, or welded on the heat sleeve.

According to one aspect of the present invention, the protrusions are welded on the pressurizer safety valve connecting pipe.

Compared with the prior art, the water sealing device of a nuclear power plant pressurizer according to the present invention has the following advantages:
The water sealing structure, in which the safety end of the pressurizer safety valve connecting pipe having the heat sleeve is connected to the elbow, achieves water sealing by heat releasing and condensation of saturated water vapor through the pressurizer safety valve, the pressurizer safety valve connecting pipe and the safety end, so that hydrogen leakage can be prevented.

A high temperature water sealing can be formed. The temperature of the condensated water in the water sealing system is higher, which can reduce the hydraulic load on the downstream discharge pipe of the safety valve effectively after the safety valve is opened.

The heat sleeve can reduce the fatigue effect caused by the temperature difference of the fluid, and the water sealing structure of heat sleeve and elbow has a small volume, which can quickly form a water sealing.

The safety end of the pressurizer safety valve connecting pipe having the heat sleeve and the elbow are located inside the upper head body of the pressurizer, which can save the layout space of the pressurizer.

The protrusions can effectively support the heat sleeve.

### BRIEF DESCRIPTION OF THE DRAWINGS

The nuclear power plant pressurizer and a water sealing device thereof of the present invention will now be described in detail below with reference to the accompanying drawings, in which:
Fig. 1 is a cross-sectional view of a water sealing device of a nuclear power plant pressurizer according to one embodiment of the present invention;
Fig. 2 is a cross-sectional view of a safety end and an elbow of the water sealing device of a nuclear power plant pressurizer shown in Fig. 1;
Fig. 3 is a cross-sectional view of a water sealing device of a nuclear power plant pressurizer as shown in Fig. 1, showing the forming of a water sealing; and
Fig. 4 is a cross-sectional view of a water sealing device of a nuclear power plant pressurizer as shown in Fig. 1, showing a formed water sealing.

### DETAILED DESCRIPTION OF THE INVENTION

In order to make the objective, technical solutions and technical effects of the present invention clearer, the present invention will be further described in detail below in conjunction with the accompanying drawings and embodiments. It should be understood that the embodiments described herein are only for explaining the present invention, not for limiting the scope of the present invention, which is defined by the claims.

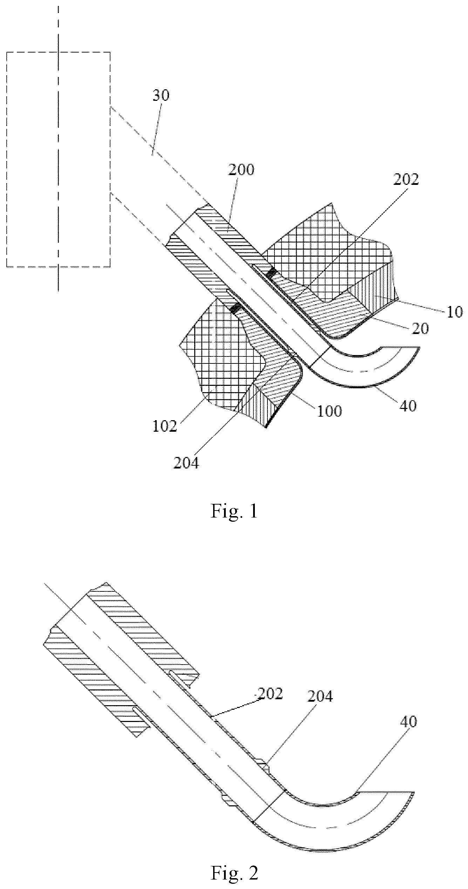

Referring to Figs. 1 to 4, a water sealing device of a nuclear power plant pressurizer according to one embodiment of the present includes:
an upper head body 10 having an inner surface surfacing layer 100 at an inner side of the pressurizer and a heat insulation layer 102 at an outer side of the pressurizer; and
a pressurizer safety valve connecting pipe 20 extending upwardly and obliquely through the upper head body 10, the pressurizer safety valve connecting pipe 20 being provided with a safety end 200, one end of the safety end 200 being provided with a heat sleeve 202 in the pressurizer safety valve connecting pipe 20, and the other end of the safety end 200 extending out of the heat insulation layer 102 and being connected to a process pipe of the pressurizer safety valve 30;
wherein the safety end 200 is provided with an elbow 40 extending downwardly and obliquely into the pressurizer, and a distal end of the elbow 40 is vertically located above the lowest point of the upper inner sidewall of the elbow 40.

According to one embodiment of the present invention, the pressurizer safety valve is not provided with heat insulation layer. The heat insulation layer 102 has a thickness of 280mm to 300mm. The pressurizer safety valve connecting pipe 20 and the safety end 200 at least partially extend out of the heat insulation layer 102. For example, according to one embodiment of the present invention, process pipe 30 of the pressurizer safety valve, the pressurizer safety valve connecting pipe 20 and the safety end 200 extend out of the heat insulation layer 102 for at least 480mm totally.

In the embodiment as illustrated, the process pipe 30 of the pressurizer safety valve is connected to the safety end 200 of the pressurizer safety valve connecting pipe 20 via welding, the pressurizer safety valve connecting pipe 20 is connected to the safety end 200 via welding, and the pressurizer safety valve connecting pipe 20 is connected to the upper head body 10 via welding.

Referring to Fig. 2, a number of protrusions 204 are provided between the pressurizer safety valve connecting pipe 20 and the heat sleeve 202 of the safety end 200. The arrangement of the protrusions 204 is not particularly limited. For example, the protrusions 204 and the heat sleeve 202 can be integrally formed via machining, the protrusions 204 can be welded to the safety end 200 having the heat sleeve 202, or the the protrusions 204 can also be welded to the pressurizer safety valve connecting pipe 20. In the illustrated embodiment, four protrusions 204 are evenly provided around the heat sleeve 202.

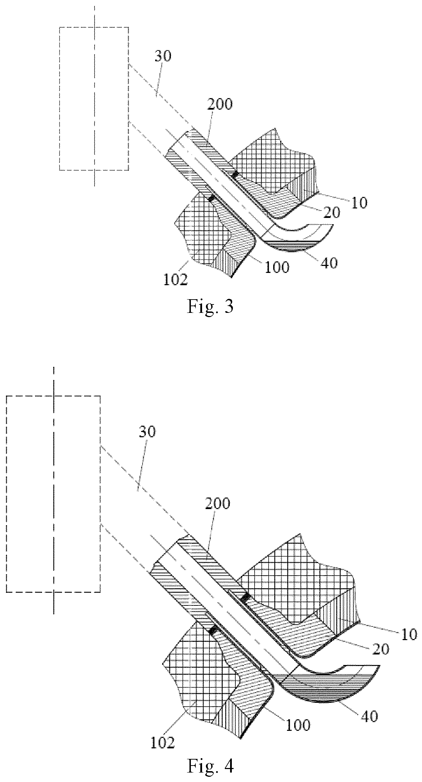

Referring to Figs. 3 and 4, the working principle of the water sealing device of a nuclear power plant pressurizer according to the present invention is detailed as following:
When the pressurizer starts, the high-temperature and high-pressure saturated water vapor in the pressurizer passes through the process pipe 30 of the pressurizer safety valve not covered with the heat insulation layer 102, the pressurizer safety valve connecting pipe 20 and the safety end 200, to carry out heat conduction and heat radiation to the external environment.

Part of the saturated water vapor in the water sealing system is condensed and dripped into the elbow 40 through the safety end 200 and the pressurizer safety valve connecting pipe 20 successively. When the liquid level of condensed water is vertically over the lowest point on the upper inner sidewall of the elbow 40 and there is a height difference between the inlet and outlet liquid levels of the water sealing system, the water seal has been established.

The establishment of the water sealing separates the connection between the vapor phase space of the pressurizer and the pressurizer safety valve, and prevents the hydrogen in the pressurizer from being discharged to the outside through the pressurizer safety valve. Since the condensed water in the water sealing system is formed by the condensation of high temperature and high pressure saturated steam, and is connected to the high temperature vapor phase space of the pressurizer, the temperature of the condensed water in the water sealing system is relatively high. During the normal operation of the pressurizer, the temperature difference between the condensated water in the water sealing system and the vapor phase space of the pressurizer is less than 30°C, which can effectively reduce the hydraulic load on the downstream discharge pipe after the safety valve is opened.

In addition, the present invention also provides a nuclear power plant pressurizer which includes the water sealing device of a nuclear power plant pressurizer of the present invention as previously described.

Compared with the prior art, the water sealing device of a nuclear power plant pressurizer according to the present invention has the following advantages:
The water sealing structure, in which the safety end 200 of the pressurizer safety valve connecting pipe 20 having the heat sleeve 202 is connected to the elbow 40, achieves water sealing by heat releasing and condensation of saturated water vapor through the pressurizer safety valve, the pressurizer safety valve connecting pipe 20 and the safety end 200, so that hydrogen leakage can be prevented.

A high temperature water sealing can be formed. The temperature of the condensated water in the water sealing system is higher, which can reduce the hydraulic load on the downstream discharge pipe of the safety valve effectively after the safety valve is opened.

The heat sleeve 202 can reduce the fatigue effect caused by the temperature difference of the fluid, and the water sealing structure of heat sleeve 202 and elbow 40 has a small volume, which can quickly form a water sealing.

The safety end 200 of the pressurizer safety valve connecting pipe 20 having the heat sleeve 202 and the elbow 40 are located inside the upper head body 10 of the pressurizer, which can save the layout space of the pressurizer.

The protrusions 204 can effectively support the heat sleeve 202.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A nuclear power plant pressurizer comprising a water sealing device, **characterized in that** the water sealing device comprises:
an upper head body (10) having an inner surface surfacing layer (100) at an inner side of the pressurizer and a heat insulation layer (102) at an outer side of the pressurizer; and
a pressurizer safety valve connecting pipe (20) extending upwardly and obliquely through the upper head body (10), the pressurizer safety valve connecting pipe (20) being provided with a safety end (200), one end of the safety end (200) being provided with a heat sleeve (202) in the pressurizer safety valve connecting pipe (20), and the other end of the safety end (200) extending out of the heat insulation layer (102);
wherein the safety end (200) is provided with an elbow (40) extending downwardly and obliquely into the pressurizer, and a distal end of the elbow (40) is vertically located above the lowest point of upper inner sidewall of the elbow (40).

2. The nuclear power plant pressurizer of claim 1, **characterized in that** the heat insulation layer (102) has a thickness of 280mm-300mm.

3. The nuclear power plant pressurizer of claim 1, **characterized in that** the process pipe (30) of the pressurizer safety valve is connected to the safety end (200) of the pressurizer safety valve connecting pipe (20) via welding.

4. The nuclear power plant pressurizer of claim 1, **characterized in that** the pressurizer safety valve connecting pipe (20) and the safety end (200) at least partially extend out of the heat insulation layer (102).

5. The nuclear power plant pressurizer of claim 1, **characterized in that** the process pipe (30) of the pressurizer safety valve, the pressurizer safety valve connecting pipe (20) and the safety end (200) extend out of the heat insulation layer (102) for at least 480mm totally.

6. The nuclear power plant pressurizer of claim 1, **characterized in that** the pressurizer safety valve connecting pipe (20) is connected to the safety end (200) via welding, and the pressurizer safety valve connecting pipe (20) is connected to the upper head body (10) via welding.

7. The nuclear power plant pressurizer of any one of claims 1 to 6, **characterized in that** a plurality of protrusions (204) are provided between the pressurizer safety valve connecting pipe (20) and the heat sleeve (202).

8. The nuclear power plant pressurizer of claim 7, **characterized in that** the protrusions (204) are integrally formed with the heat sleeve (202) via machining, or welded on the heat sleeve (202).

9. The nuclear power plant pressurizer of claim 7, **characterized in that** the protrusions (204) are welded on the pressurizer safety valve connecting pipe (20).

## Patentansprüche

1. Druckhalter für Kernkraftwerk, der eine Wasserabdichtungsvorrichtung umfasst, **dadurch gekennzeichnet, dass** die Wasserabdichtungsvorrichtung Folgendes umfasst:
einen oberen Kopfkörper (10) mit einer Innenoberflächenbeschichtungsschicht (100) an einer Innenseite des Druckhalters und einer Wärmedämmschicht (102) an einer Außenseite des Druckhalters; und
ein Druckhaltersicherheitsventil-Verbindungsrohr (20), das sich nach oben und schräg durch den oberen Kopfkörper (10) erstreckt, wobei das Druckhaltersicherheitsventil-Verbindungsrohr (20) mit einem Sicherheitsende (200) bereitgestellt ist, wobei ein Ende des Sicherheitsendes (200) mit einer Wärmehülse (202) in dem Druckhaltersicherheitsventil-Verbindungsrohr (20) bereitgestellt ist und sich das andere Ende des Sicherheitsendes (200) aus der Wärmedämmschicht (102) heraus erstreckt;
wobei das Sicherheitsende (200) mit einem Rohrkrümmer (40) bereitgestellt ist, der sich nach unten und schräg in den Druckhalter erstreckt, und sich ein distales Ende des Rohrkrümmers (40) vertikal über dem tiefsten Punkt der oberen inneren Seitenwand des Rohrkrümmers (40) befindet.

2. Druckhalter für Kernkraftwerk nach Anspruch 1, **dadurch gekennzeichnet, dass** die Wärmedämmschicht (102) eine Dicke von 280 mm-300 mm aufweist.

3. Druckhalter für Kernkraftwerk nach Anspruch 1, **dadurch gekennzeichnet, dass** das Prozessrohr (30) des Druckhaltersicherheitsventils durch Schweißen mit dem Sicherheitsende (200) des Druckhaltersicherheitsventil-Verbindungsrohrs (20) verbunden ist.

4. Druckhalter für Kernkraftwerk nach Anspruch 1, **dadurch gekennzeichnet, dass** sich das Druckhaltersicherheitsventil-Verbindungsrohr (20) und das Sicherheitsende (200) zumindest teilweise aus der Wärmedämmschicht (102) heraus erstrecken.

5. Druckhalter für Kernkraftwerk nach Anspruch 1, **dadurch gekennzeichnet, dass** sich das Prozessrohr (30) des Druckhaltersicherheitsventils, das Druckhaltersicherheitsventil-Verbindungsrohr (20) und das Sicherheitsende (200) insgesamt mindestens 480 mm aus der Wärmedämmschicht (102) heraus erstrecken.

6. Druckhalter für Kernkraftwerk nach Anspruch 1, **dadurch gekennzeichnet, dass** das Druckhaltersicherheitsventil-Verbindungsrohr (20) durch Schweißen mit dem Sicherheitsende (200) verbunden ist und das Druckhaltersicherheitsventil-Verbindungsrohr (20) durch Schweißen mit dem oberen Kopfkörper (10) verbunden ist.

7. Druckhalter für Kernkraftwerk nach einem der Ansprüche 1 bis 6, **dadurch gekennzeichnet, dass** eine Vielzahl von Vorsprüngen (204) zwischen dem Druckhaltersicherheitsventil-Verbindungsrohr (20) und der Wärmehülse (202) bereitgestellt sind.

8. Druckhalter für Kernkraftwerk nach Anspruch 7, **dadurch gekennzeichnet, dass** die Vorsprünge (204) durch spanende Bearbeitung einstückig mit der Wärmehülse (202) ausgebildet oder an die Wärmehülse (202) geschweißt sind.

9. Druckhalter für Kernkraftwerk nach Anspruch 7, **dadurch gekennzeichnet, dass** die Vorsprünge (204) an das Druckhaltersicherheitsventil-Verbindungsrohr (20) geschweißt sind.

## Revendications

1. Pressuriseur de centrale nucléaire comprenant un dispositif d'étanchéité à l'eau, **caractérisé en ce que** le dispositif d'étanchéité à l'eau comprend :
un corps de tête supérieur (10) comportant une couche de revêtement de surface interne (100) au niveau d'un côté interne du pressuriseur et une couche d'isolation thermique (102) au niveau d'un côté externe du pressuriseur ; et
un tuyau de raccordement (20) de soupape de sécurité de pressuriseur s'étendant vers le haut et obliquement à travers le corps de tête supérieur (10), le tuyau de raccordement (20) de soupape de sécurité de pressuriseur étant doté d'une extrémité de sécurité (200), une extrémité de l'extrémité de sécurité (200) étant dotée d'un manchon thermique (202) dans le tuyau de raccordement (20) de soupape de sécurité de pressuriseur, et l'autre extrémité de l'extrémité de sécurité (200) s'étendant hors de la couche d'isolation thermique (102) ;
ladite extrémité de sécurité (200) étant dotée d'un coude (40) s'étendant vers le bas et obliquement dans le pressuriseur, et une extrémité distale du coude (40) étant située verticalement au-dessus du point le plus bas de la paroi latérale interne supérieure du coude (40).

2. Pressuriseur de centrale nucléaire de la revendication 1, **caractérisé en ce que** la couche d'isolation thermique (102) possède une épaisseur de 280 mm-300 mm.

3. Pressuriseur de centrale nucléaire de la revendication 1, **caractérisé en ce que** le tuyau de traitement (30) de la soupape de sécurité de pressuriseur est raccordé à l'extrémité de sécurité (200) du tuyau de raccordement (20) de soupape de sécurité de pressuriseur par soudage.

4. Pressuriseur de centrale nucléaire de la revendication 1, **caractérisé en ce que** le tuyau de raccordement (20) de soupape de sécurité de pressuriseur et l'extrémité de sécurité (200) s'étendent au moins partiellement hors de la couche d'isolation thermique (102).

5. Pressuriseur de centrale nucléaire de la revendication 1, **caractérisé en ce que** le tuyau de traitement (30) de la soupape de sécurité de pressuriseur, le tuyau de raccordement (20) de soupape de sécurité de pressuriseur et l'extrémité de sécurité (200) s'étendent hors de la couche d'isolation thermique (102) sur au moins 480 mm au total.

6. Pressuriseur de centrale nucléaire de la revendication 1, **caractérisé en ce que** le tuyau de raccordement (20) de soupape de sécurité de pressuriseur est raccordé à l'extrémité de sécurité (200) par soudage, et le tuyau de raccordement (20) de soupape de sécurité de pressuriseur est raccordé au corps de tête supérieur (10) par soudage.

7. Pressuriseur de centrale nucléaire de l'une quelconque des revendications 1 à 6, **caractérisé en ce qu'**une pluralité de saillies (204) sont prévues entre le tuyau de raccordement (20) de soupape de sécurité de pressuriseur et le manchon thermique (202).

8. Pressuriseur de centrale nucléaire de la revendication 7, **caractérisé en ce que** les saillies (204) sont formées d'un seul tenant avec le manchon thermique (202) par usinage, ou soudées sur le manchon thermique (202).

9. Pressuriseur de centrale nucléaire de la revendication 7, **caractérisé en ce que** les saillies (204) sont soudées sur le tuyau de raccordement (20) de soupape de sécurité de pressuriseur.
